(19) Europäisches Patentamt
European Patent Office
Office européen des brevets

(11) **EP 4 438 170 A1**

(12) **EUROPEAN PATENT APPLICATION**
published in accordance with Art. 153(4) EPC

(43) Date of publication:
**02.10.2024 Bulletin 2024/40**

(21) Application number: **22895201.6**

(22) Date of filing: **02.09.2022**

(51) International Patent Classification (IPC):
*B01J 20/34* (2006.01)      *B01D 53/50* (2006.01)
*B01D 53/56* (2006.01)      *B01D 53/68* (2006.01)
*B01D 53/82* (2006.01)      *B01J 20/08* (2006.01)
*C01F 7/785* (2022.01)

(52) Cooperative Patent Classification (CPC):
**B01D 53/50; B01D 53/56; B01D 53/68;**
**B01D 53/82; B01J 20/08; B01J 20/34; C01F 7/785**

(86) International application number:
**PCT/JP2022/033141**

(87) International publication number:
**WO 2023/089913 (25.05.2023 Gazette 2023/21)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.11.2021 JP 2021189622**

(71) Applicants:
• **Kurita Water Industries Ltd.**
**Tokyo 164-0001 (JP)**

• **Tohoku University**
**Sendai-shi, Miyagi 980-8577 (JP)**

(72) Inventors:
• **ITOU, Ichirou**
**Tokyo 164-0001 (JP)**
• **YOSHIOKA, Toshiaki**
**Sendai-shi, Miyagi 980-8577 (JP)**
• **KAMEDA, Tomohito**
**Sendai-shi, Miyagi 980-8577 (JP)**

(74) Representative: **TBK**
**Bavariaring 4-6**
**80336 München (DE)**

(54) **METHOD FOR REGENERATING CARBONATE-TYPE LAYERED DOUBLE HYDROXIDE, ACIDIC EXHAUST GAS TREATMENT METHOD, AND ACIDIC EXHAUST GAS TREATMENT EQUIPMENT**

(57)      A method for regenerating a used carbonate-type Mg-Al layered double hydroxide in which at least some of interlayer carbonate ions of a carbonate-type Mg-Al layered double hydroxide are exchanged with another anion includes contacting the used carbonate-type Mg-Al layered double hydroxide with a carbon dioxide-containing gas that contains carbon dioxide in the presence of an alkali.

[Fig. 1]

EP 4 438 170 A1

**Description**

Technical Field

The present invention relates to a method for regenerating carbonate-type layered double hydroxide, a method for treating acid exhaust gas using the regeneration method, and a facility for treating acid exhaust gas.

Background Art

The combustion exhaust gas generated in combustion plants such as thermal power plants and waste incineration plants contains harmful acid materials such as hydrogen chloride, sulfur oxides, and nitrogen oxides. Various techniques are available as treatment techniques for removing the acid materials from the acid exhaust gas containing the acid materials.

As an efficient treatment technique capable of simultaneously treating and removing a plurality of types of acid materials, the present inventors have proposed a method for treating an acid exhaust gas using a carbonate-type Mg-Al layered double hydroxide, a treatment agent, etc.

The carbonate-type Mg-Al layered double hydroxide is a treatment agent that can be regenerated for repeated use. Accordingly, after the carbonate-type Mg-Al layered double hydroxide is used in treatment of an acid exhaust gas, the used layered double hydroxide is regenerated and reused.

PTL1 describes a method of, after a carbonate-type Mg-Al layered double hydroxide is used in treatment of an acid exhaust gas, regenerating the used layered double hydroxide by mixing with a carbonate aqueous solution.

PTL2 describes a method of, after a carbonate-type Mg-Al layered double hydroxide is used in treatment of an acid exhaust gas, regenerating the used layered double hydroxide into a carbonate-type Mg-Al layered double hydroxide by contacting with a treated gas from which acid gases other than carbon dioxide have been removed by the carbonate-type Mg-Al layered double hydroxide.

Cited List

Patent Literature

PTL1: JP 2016-190199 A

PTL2: JP 2021-090913 A

Summary of Invention

Technical Problem

According to the regeneration method described in PTL1, since it is necessary to mix the used layered double hydroxide with a carbonate aqueous solution, a facility for regenerating the used layered double hydroxide is required to be provided outside a combustion plant. In this case, it is necessary to transport the used layered double hydroxide and the regenerated carbonate-type Mg-Al layered double hydroxide between a combustion plant and the regeneration facility of the layered double hydroxide, and it is also necessary to install the regeneration facility of the layered double hydroxide separately from the combustion plant, so that there is a problem that labor and cost burdens are large.

In the case where a facility for regenerating the used layered double hydroxide is installed in a combustion plant, installation and connection of a storage tank and a mixing tank for the carbonate aqueous solution are required, so that the scale of the combustion plant is required to be enlarged.

According to the regeneration method described in PTL2, although installation of a large-scale regeneration facility for a layered double hydroxide is not required in a combustion plant, the problem is that a sufficient regeneration effect is hardly obtained.

An object of the present invention is to provide a method for regenerating carbonate-type layered double hydroxide, capable of regenerating a used layered double hydroxide obtained after a carbonate-type Mg-Al layered double hydroxide is used for treatment of an acid exhaust gas, into a carbonate-type Mg-Al layered double hydroxide effectively without requirement of a large-scale facility, a method for treating acid exhaust gas, and a facility for treating acid exhaust gas.

Solution to Problem

As a result of extensive studies, the present inventors have found that a used layered double hydroxide can be effectively regenerated into a carbonate-type Mg-Al layered double hydroxide by contacting a used layered double hydroxide obtained after a carbonate-type Mg-Al layered double hydroxide is used in treatment of an acid exhaust gas, with a treated gas containing carbon dioxide treated with the carbonate-type Mg-Al layered double hydroxide in the presence of an alkali. The present invention is based on the finding.

That is, the present invention provides the following [1] to [7].

[1] A method for regenerating a used carbonate-type Mg-Al layered double hydroxide in which at least some of interlayer carbonate ions of a carbonate-type Mg-Al layered double hydroxide are exchanged with another anion, the method comprising:

contacting the used carbonate-type Mg-Al layered double hydroxide with a carbon dioxide-containing gas that comprises carbon dioxide in the presence of an alkali.

[2] The method for regenerating a used carbonate-type Mg-Al layered double hydroxide according to item [1],

wherein the used carbonate-type Mg-Al layered double hydroxide is obtained by contacting a carbonate-type Mg-Al layered double hydroxide with an acid exhaust gas comprising carbon dioxide and acid materials other than carbon dioxide to remove the acid materials from the acid exhaust gas, thereby obtaining a treated gas, and the carbon dioxide-containing gas that comprises carbon dioxide is the treated gas.

[3] The method for regenerating a used carbonate-type Mg-Al layered double hydroxide according to item [2], wherein the acid exhaust gas is a combustion exhaust gas generated from an incinerator.

[4] A method for treating an acid exhaust gas, comprising:

an acid exhaust gas treatment step of contacting an acid exhaust gas comprising carbon dioxide and acid materials other than carbon dioxide with a carbonate-type Mg-Al layered double hydroxide to remove the acid materials from the acid exhaust gas, thereby obtaining a treated gas; and a regeneration step of regenerating a used carbonate-type Mg-Al layered double hydroxide generated in the acid exhaust gas treatment step, wherein in the regeneration step, the regeneration method according to item [2] or [3] is performed.

[5] A facility for treating an acid exhaust gas, comprising:

a housing container that houses a carbonate-type Mg-Al layered double hydroxide; a supply pipe that supplies an acid exhaust gas comprising carbon dioxide and acid materials other than carbon dioxide to the housing container; a discharge pipe that discharges a treated gas discharged from the housing container after treatment of the acid materials therein; and a regeneration apparatus that regenerates the carbonate-type Mg-Al layered double hydroxide in the housing container; wherein the regeneration apparatus comprises an alkali addition apparatus that adds an alkali to the housing container, and a return pipe that returns the treated gas to the housing container.

[6] The facility for treating an acid exhaust gas according to item [5], wherein the alkali addition apparatus comprises an alkaline aqueous solution storage tank that stores an alkaline aqueous solution, and an alkaline aqueous solution inflow pipe that connects the alkaline aqueous solution storage tank and the housing container.

[7] The facility for treating an acid exhaust gas according to item [5] or [6], wherein the regeneration apparatus is connected to the housing container and comprises a waste liquid discharge apparatus to discharge the alkaline aqueous solution flowing into the housing container to the outside of the housing container.

Advantageous Effects of Invention

According to the present invention, there can be provided a method for regenerating a carbonate-type layered double hydroxide, capable of regenerating a used layered double hydroxide obtained after a carbonate-type Mg-Al layered double hydroxide is used for treatment of an acid exhaust gas, into a carbonate-type Mg-Al layered double hydroxide effectively without requirement of a large-scale facility, a method for treating acid exhaust gas, and a facility for treating acid exhaust gas.

Brief Description of Drawings

[Fig. 1] Fig. 1 is a schematic diagram illustrating a step of regenerating a used layered double hydroxide in a first housing container 120a using an incineration plant having a facility for treating an acid exhaust gas in one embodiment of the present invention.
[Fig. 2] Fig. 2 is a schematic diagram illustrating an acid exhaust gas treatment step in a second housing container 120b using an incineration plant having a facility for treating an acid exhaust gas in one embodiment of the present invention.
[Fig. 3] Fig. 3 is a schematic diagram illustrating a step of regenerating a used layered double hydroxide in a second housing container 120b using an incineration plant having a facility for treating an acid exhaust gas in one embodiment of the present invention.
[Fig. 4] Fig. 4 is a graph illustrating the results of powder X-ray diffraction measurement.

Description of Embodiments

A method for regenerating a carbonate-type layered double hydroxide, a method for treating an acid exhaust gas, and a facility for treating an acid exhaust gas of the present invention are described as follows partly with reference to drawings.
In the present specification, "acid materials other than carbon dioxide" may be simply referred to as "acid materials". That is, in the present invention, the term "acid materials" means "acid materials other than carbon dioxide".

[Method for regenerating used carbonate-type Mg-Al layered double hydroxide]

A method for regenerating a used carbonate-type Mg-Al layered double hydroxide of the present invention is a method for regenerating a used carbonate-type Mg-Al layered double hydroxide in which at least some of interlayer carbonate ions of a carbonate-type Mg-Al layered double hydroxide are exchanged with another anion, the method comprising:
contacting the used carbonate-type Mg-Al layered double hydroxide with a carbon dioxide-containing gas that contains carbon dioxide in the presence of an alkali.
As described above, by contacting a used carbonate-type Mg-Al layered double hydroxide with a carbon dioxide-containing gas that contains carbon dioxide in the presence of an alkali, the used layered double hydroxide can be efficiently regenerated into a carbonate-type Mg-Al layered double hydroxide.
The reason is presumed as follows, though not clear.
That is, the carbonate-type Mg-Al layered double hydroxide has a structure in which a hydroxide base layer and an interlayer composed of interlayer carbonate ions and interlayer water are alternately laminated. In the used carbonate-type Mg-Al layered double hydroxide, some or all of the interlayer carbonate ions have been exchanged with an anion derived from acid materials. Through regeneration by contacting the used carbonate-type Mg-Al layered double hydroxide with a carbon dioxide-containing gas that contains carbon dioxide in the presence of an alkali, dissolution of the carbonate ions into the interlayer water is accelerated due to presence of the alkali, so that ion exchange between anions derived from acid materials and carbonate ions derived from carbon dioxide in a treated gas is accelerated. Accordingly, it is presumed that the regeneration efficiency is improved.
In the method for regenerating used carbonate-type Mg-Al layered double hydroxide in a first aspect, the used carbonate-type Mg-Al layered double hydroxide is obtained by contacting a carbonate-type Mg-Al layered double hydroxide with an acid exhaust gas containing carbon dioxide and acid materials other than carbon dioxide to remove the acid materials from the acid exhaust gas, thereby obtaining a treated gas, and
the carbon dioxide-containing gas that contains carbon dioxide is the treated gas.
In other words, the method for regenerating a used carbonate-type Mg-Al layered double hydroxide in the first aspect is a method for regenerating a used carbonate-type Mg-Al layered double hydroxide obtained by contacting a carbonate-type Mg-Al layered double hydroxide with an acid exhaust gas containing carbon dioxide and acid materials other than carbon dioxide to remove the acid materials from the acid exhaust gas, thereby obtaining a treated gas, the method comprising:
contacting the used carbonate-type Mg-Al layered double hydroxide with the treated gas in the presence of an alkali.
In this case, by using the treated gas obtained by the carbonate-type Mg-Al layered double hydroxide as the carbon dioxide-containing gas for regeneration, the separate preparation of a carbon dioxide-containing gas for regeneration is not required, which is advantageous.

<Carbon dioxide-containing gas that contains carbon dioxide>

Although the carbon dioxide-containing gas that contains carbon dioxide is not particularly limited, as described above, a treated gas is preferred from the viewpoint that the separate preparation of a carbon dioxide-containing gas for regeneration is not required.

<Acid exhaust gas>

The acid exhaust gas contains carbon dioxide and acid materials other than carbon dioxide.

Examples of the acid materials include hydrogen chloride, $SO_x$ such as sulfur dioxide, and $NO_x$ such as nitrogen dioxide.

Carbon dioxide is also an acid material. However, in this specification, carbon dioxide is not included in "acid materials" from the viewpoint of distinguishing carbon dioxide from acid materials other than carbon dioxide.

The acid exhaust gas is not particularly limited as long as it contains carbon dioxide and acid materials, and examples thereof include combustion exhaust gas generated from incinerators of combustion plants such as thermal power plants and incineration plants.

Since the combustion exhaust gas contains a large amount of carbon dioxide, the treated gas from which the acid materials are removed by contacting the combustion exhaust gas with the carbonate-type Mg-Al layered double hydroxide also contains a large amount of carbon dioxide. Therefore, in the case of using the treated gas to regenerate the used carbonate-type Mg-Al layered double hydroxide, the regeneration can be performed efficiently.

The content of carbon dioxide in the acid exhaust gas is preferably 1 to 20 vol%, more preferably 5 to 18 vol%, and still more preferably 10 to 15 vol%. With a content of 1 vol% or more, the reactivity of the ion exchange reaction is increased, so that in the case of regenerating a used carbonate-type Mg-Al layered double hydroxide by using the treated gas derived from the acid exhaust gas, the regeneration can be efficiently performed.

The content of acid materials in the acid exhaust gas is preferably 10 to 5000 vol ppm, more preferably 200 to 3000 vol ppm, still more preferably 300 to 1500 vol ppm, and even more preferably 500 to 1000 vol ppm.

The water content in the acid exhaust gas is preferably 0 to 30 vol%, more preferably 5 to 25 vol%, and still more preferably 10 to 20 vol%.

The total content of nitrogen, oxygen, carbon dioxide, acid materials and water in the acid exhaust gas is preferably 90 vol% or more, more preferably 95 vol% or more, and still more preferably 99 vol% or more.

<Carbonate-type Mg-Al layered double hydroxide>

A carbonate-type Mg-Al layered double hydroxide is a particle having a structure in which a hydroxide base layer ($[Mg^{2+}_{1-x}Al^{3+}_x(OH)_2]$) and an intermediate layer composed of interlayer carbonate ions and interlayer water ($[(CO_3^{2-})_{x/2} \cdot yH_2O]$) are alternately laminated. The carbonate-type Mg-Al layered double hydroxide is a non-stoichiometric compound in which the hydroxide base layer has a positive charge equivalent to x, and carbonate ions are present in the intermediate layer as negatively charged negative ions (anions) to compensate the charge.

The carbonate-type Mg-Al layered double hydroxide can incorporate acid materials, for example, such as hydrogen chloride, $SO_x$ and $NO_x$ as anions between the layers while maintaining the hydroxide base layer. Therefore, it can be suitably used for treatment of an acid exhaust gas to remove acid materials from the acid exhaust gas.

When the carbonate-type Mg-Al layered double hydroxide is used in treatment of an acid exhaust gas, a layered double hydroxide other than the carbonate-type Mg-Al layered double hydroxide, or, for example, a chemical agent other than the layered double hydroxide such as calcium hydroxide (slaked lime), calcium oxide, sodium bicarbonate (baking soda), sodium carbonate, dolomite hydroxide, light burnt dolomite, aluminum hydroxide, aluminum oxide, magnesium hydroxide and magnesium oxide may be used in combination. However, from the viewpoint of efficiently regenerating and reusing the carbonate-type Mg-Al layered double hydroxide, it is preferable that other layered double hydroxides or chemical agents are not mixed in.

Although the carbonate-type Mg-Al layered double hydroxides include naturally produced clay minerals as hydrotalcite, synthetic powders are usually used. The synthesis method is not particularly limited, and a known method (for example, the method described in PTL1) may be used.

For example, an aqueous mixture solution of magnesium nitrate ($Mg(NO_3)_2$) and aluminum nitrate ($Al(NO_3)_3$) with a molar ratio of Mg/Al=2/1 maintained at pH 10.5 is added dropwise to a sodium carbonate ($Na_2CO_3$) aqueous solution, so that a carbonate-type Mg-Al layered double hydroxide can be obtained.

<Used carbonate-type Mg-Al layered double hydroxide (anion-type Mg-Al layered double hydroxide)>

A carbonate-type Mg-Al layered double hydroxide, when used for treatment of an acid exhaust gas and taking the acid materials in between the layers, turns into an anion-type Mg-Al layered double hydroxide (used carbonate-type Mg-Al layered double hydroxide) in which the interlayer carbonate ions have been exchanged with other ions derived from acid materials such as chloride ions, sulfate ions, and nitrate ions. The anion-type Mg-Al layered double hydroxide produced in this manner has a reduced capability to remove an acid exhaust gas. Therefore, the anion-type Mg-Al layered double hydroxide is regenerated again by anion exchange into a carbonate-type Mg-Al layered double hydroxide for reuse.

<Treated gas>

The treated gas is an acid waste gas containing carbon dioxide and acid materials other than carbon dioxide of which a part or all of the acid materials are exchanged with carbon dioxide derived from interlayer carbonate ions in the carbonate-type Mg-Al layered double hydroxide.
The content of carbon dioxide in the acid exhaust gas is preferably 1 to 20 vol%, more preferably 5 to 18 vol%, and still more preferably 10 to 15 vol%. With a content of 1 vol% or more, when the used carbonate-type Mg-Al layered double hydroxide is regenerated using the treated gas derived from the acid exhaust gas, regeneration can be performed efficiently.
The content of acid materials in the acid exhaust gas is preferably 100 vol ppm or less, more preferably 10 vol ppm, and even more preferably 1 vol ppm.
The water content in the acid exhaust gas is preferably 0 to 30 vol%, more preferably 5 to 25 vol%, and still more preferably 10 to 20 vol%.
The total content of nitrogen, oxygen, carbon dioxide, acid materials and water in the acid exhaust gas is preferably 90 vol% or more, more preferably 95 vol% or more, and still more preferably 99 vol% or more.

<Regeneration method>

The method for regenerating the used carbonate-type Mg-Al layered double hydroxide of the present invention is a method including contacting the used carbonate-type Mg-Al layered double hydroxide with the treated gas in the presence of an alkali.
In the treated gas, the carbon dioxide that has been present in the acid exhaust gas is also present in addition to the carbon dioxide derived from the interlayer carbonate ions, so that the anions derived from the acid materials present in the used carbonate-type Mg-Al layered double hydroxide can be efficiently anion-exchanged to carbonate ions.
The anion exchange is performed in the presence of an alkali. Accordingly, the anions derived from the acid materials present in the used carbonate-type Mg-Al layered double hydroxide are more efficiently anion-exchanged to carbonate ions compared to the case of anion exchange in the absence of alkali.
The alkali is preferably sodium hydroxide or potassium hydroxide, more preferably sodium hydroxide.
The ratio of the alkali to 100 parts by mass of the used carbonate-type Mg-Al layered double hydroxide is preferably 1 to 20 parts by mass, more preferably 1 to 10 parts by mass, still more preferably 2 to 10 parts by mass, and even more preferably 2 to 5 parts by mass. With a ratio of 1 part by mass or more, the anions derived from the acid materials present in the used carbonate-type Mg-Al layered double hydroxide can be efficiently anion-exchanged to carbonate ions. With a ratio of 20 parts by mass or less, elution of the constituent elements (such as Al) of the carbonate-type Mg-Al layered double hydroxide can be prevented, so that the crystal structure of the carbonate-type Mg-Al layered double hydroxide can be maintained.
In regeneration of a used carbonate-type Mg-Al layered double hydroxide, it is preferable that an alkaline aqueous solution be added to the used carbonate-type Mg-Al layered double hydroxide, and then the used carbonate-type Mg-Al layered double hydroxide be contacted with the treated gas. Thereby, the treated gas can be contacted with the used carbonate-type Mg-Al layered double hydroxide in a state where alkali is evenly present in the used carbonate-type Mg-Al layered double hydroxide, so that the used carbonate-type Mg-Al layered double hydroxide can be regenerated more efficiently.
However, the addition of an alkaline aqueous solution to the used carbonate-type Mg-Al layered double hydroxide and the contact of the used carbonate-type Mg-Al layered double hydroxide with the treated gas may be performed at the same time. Alternatively, the alkaline aqueous solution may be added during contact with the treated gas.
The alkali concentration of the alkaline aqueous solution is preferably 0.1 to 20 mass%, more preferably 1 to 10 mass%, still more preferably 2 to 10 mass%, and even more preferably 2 to 5 mass%. With a concentration of 0.1 mass% or more, due to the low alkali concentration, the usage amount of the alkaline aqueous solution can be reduced. With a concentration of 20 mass% or less, excellence in handleability can be achieved.
The ratio of the alkaline aqueous solution to 100 parts by mass of the used carbonate-type Mg-Al layered double hydroxide is preferably 1 to 1000 parts by mass, more preferably 10 to 500 parts by mass, still more preferably 50 to 200 parts by mass, and even more preferably 80 to 120 parts by mass. With a ratio of 1 part by mass or more, the concentration of the alkaline aqueous solution can be lowered, so that excellence in handleability can be achieved. With a ratio of 1000 parts by mass or less, the usage amount of the alkaline aqueous solution can be reduced.

The temperature at which the regeneration or treatment of contacting the used carbonate-type Mg-Al layered double hydroxide with the treated gas in the presence of alkali is preferably 20 to 100°C, more preferably 60 to 95°C, still more preferably 70 to 90°C, and even more preferably 75 to 85°C. Within the range, the anion-type Mg-Al layered double hydroxide can be efficiently regenerated into the carbonate-type Mg-Al layered double hydroxide.

The time for regeneration is preferably 10 minutes to 10 hours, more preferably 30 minutes to 8 hours, and still more preferably 1 to 5 hours. With a time of 10 minutes or more, the anion-type Mg-Al layered double hydroxide can be sufficiently regenerated into the carbonate-type Mg-Al layered double hydroxide. With a time of 10 hours or less, the regeneration can be performed in a short period of time.

[Method for treating acid exhaust gas]

The method for treating an acid exhaust gas of the present invention comprises:

an acid exhaust gas treatment step of contacting an acid exhaust gas containing carbon dioxide and acid materials other than carbon dioxide with a carbonate-type Mg-Al layered double hydroxide to remove the acid materials from the acid exhaust gas, thereby obtaining a treated gas; and
a regeneration step of regenerating a used carbonate-type Mg-Al layered double hydroxide generated in the acid exhaust gas treatment step,
wherein in the regeneration step, the regeneration method described above is performed.

According to the method for treating an acid exhaust gas, the carbonate-type Mg-Al layered double hydroxide allows acid materials to be incorporated between the layers while maintaining the hydroxide base layer. Accordingly, the acid materials can be suitably removed from the acid exhaust gas.

Further, by the regeneration step, as described in the method for regenerating the used carbonate-type Mg-Al layered double hydroxide, the used layered double hydroxide can be efficiently regenerated into a carbonate-type Mg-Al layered double hydroxide.

[Facility for treating acid exhaust gas of the present invention]

A facility for treating an acid exhaust gas of the present invention comprises:

a housing container that houses a carbonate-type Mg-Al layered double hydroxide;
a supply pipe that supplies an acid exhaust gas containing carbon dioxide and acid materials other than carbon dioxide to the housing container;
a discharge pipe that discharges a treated gas discharged from the housing container after treatment of the acid materials therein; and
a regeneration apparatus that regenerates the carbonate-type Mg-Al layered double hydroxide in the housing container;
wherein the regeneration apparatus comprises an alkali addition apparatus that adds an alkali to the housing container, and a return pipe that returns the treated gas to the housing container.

By using the facility for treating an acid exhaust gas, the method for treating an acid exhaust gas can be efficiently performed.

It is preferable that the alkali addition apparatus have an alkaline aqueous solution storage tank that stores an alkaline aqueous solution, and an alkaline aqueous solution inflow pipe that connects the alkaline aqueous solution storage tank and the housing container. As a result, the method for treating an acid exhaust gas described above can be performed more efficiently.

Also, it is preferable that the regeneration apparatus have a waste liquid discharge apparatus connected to the housing container, which discharges the alkaline aqueous solution flowing into the housing container to the outside of the housing container. As a result, the method for treating an acid exhaust gas described above can be performed more efficiently.

[Specific examples of facility for treating acid exhaust gas, and method for treating acid exhaust gas]

<Facility for treating acid exhaust gas>

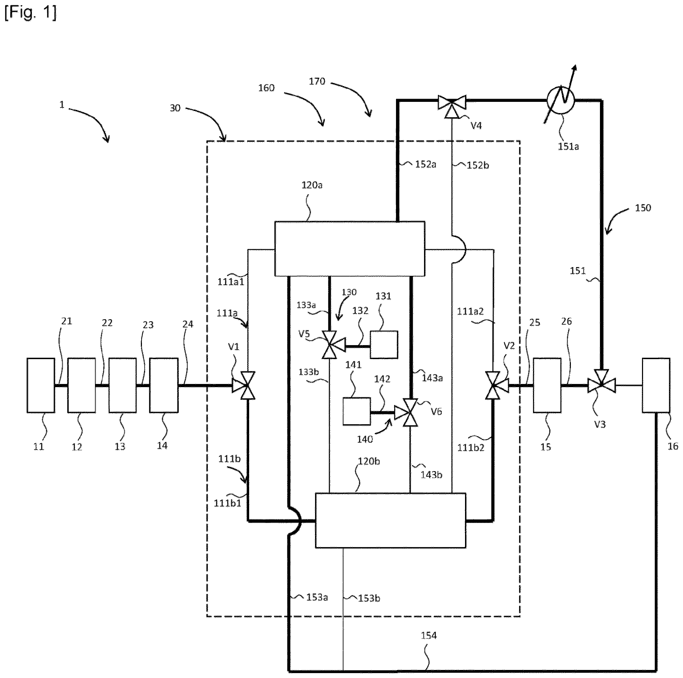

Fig. 1 is a first schematic diagram illustrating an incineration plant having a facility for treating an acid exhaust gas in one embodiment of the present invention.

An incineration plant 1 shown in Fig. 1 includes an incinerator 11, a boiler 12, a gas cooling apparatus 13, a dust collector 14, a layered double hydroxide housing apparatus 30, an induced draft fan 15, a stack 16, and pipe 21 to 26 sequentially connecting therebetween to form a flue.

The incineration plant 1 further includes an alkali addition apparatus 130, a waste liquid discharge apparatus 140, and a regeneration gas supply apparatus 150, which will be described below.

The layered double hydroxide housing apparatus 30 includes a first three-way valve V1, a second three-way valve V2, and a first pipe 111a and a second pipe 111b connecting the first three-way valve V1 and the second three-way valve V2 in parallel, a first housing container 120a provided on the way of the first pipe 111a, and a second housing container 120b provided on the way of the second pipe 111b.

Of the three connection ports of the first three-way valve V1, the connection port to which the first pipe 111a and the second pipe 111b are not connected is connected to the pipe 24. Of the three connection ports of the second three-way valve V2, the connection port to which the first pipe 111a and the second pipe 111b are not connected is connected to the pipe 25.

The first pipe 111a includes a pipe 111a1 on the upstream of the first housing container 120a and a pipe 111a2 on the downstream of the first housing container 120a. In other words, the first three-way valve V1 and the first housing container 120a are connected through the pipe 111a1, and the first housing container 120a and the second three-way valve V2 are connected through the pipe 111a2.

The second pipe 111b includes a pipe 111b1 on the upstream of the second housing container 120b and a pipe 111b2 on the downstream of the second housing container 120b. In other words, the first three-way valve V1 and the second housing container 120b are connected through the pipe 111b1, and the second housing container 120b and the second three-way valve V2 are connected through the pipe 111b2.

In the first housing container 120a and the second housing container 120b, the carbonate-type Mg-Al layered double hydroxide is housed.

The alkali addition apparatus 130 includes an alkaline aqueous solution storage tank 131, an alkali supply three-way valve V5, a pipe 132 connecting the alkali supply three-way valve V5 and the alkaline aqueous solution storage tank 131, a pipe 133a connecting the three-way valve V5 and the first housing container 120a, and a pipe 133b connecting the three-way valve V5 and the first housing container 120b.

The waste liquid discharge apparatus 140 includes a waste liquid containing container 141, an alkali discharge three-way valve V6, a pipe 142 connecting the three-way valve V6 and the waste liquid containing container 141, a pipe 143 connecting the three-way valve V6 and the first housing container 120a, and a pipe 143b connecting the three-way valve V6 and the second housing container 120b.

A third three-way valve V3 is installed on the way of the pipe 26 connecting an induced draft fan 15 and a stack 16, and a return pipe 151 is connected to a remaining connection port of a third three-way valve V3. The return pipe 151 is branched into a return pipe 152a and a return pipe 152b through a fourth three-way valve V4. The return pipe 152a is connected to the first housing container 120a, and the return pipe 152b is connected to the second housing container 120b. A heat exchanger 151a is installed on the way of the return pipe 151.

To the first housing container 120a, one end of an exhaust gas pipe 153a is connected, and to the second housing container 120b, one end of an exhaust gas pipe 153b is connected. Other ends of the exhaust gas pipe 153a and 153b join together to form an exhaust gas pipe 154, and another end of the exhaust gas pipe 154 is connected to the stack 16.

The regeneration gas supply apparatus 150 is composed of the third three-way valve V3, the heat exchanger 151a, the fourth three-way valve V4, the pipe 151, the pipe 152a, the pipe 152b, the pipe 153a, the pipe 153b, and the pipe 154.

A regeneration apparatus 160 is composed of the alkali addition apparatus 130, the waste liquid discharge apparatus 140, and the regeneration gas supply apparatus 150.

A facility for treating acid exhaust gas 170 is composed of the layered double hydroxide housing apparatus 30 and the regeneration apparatus 160.

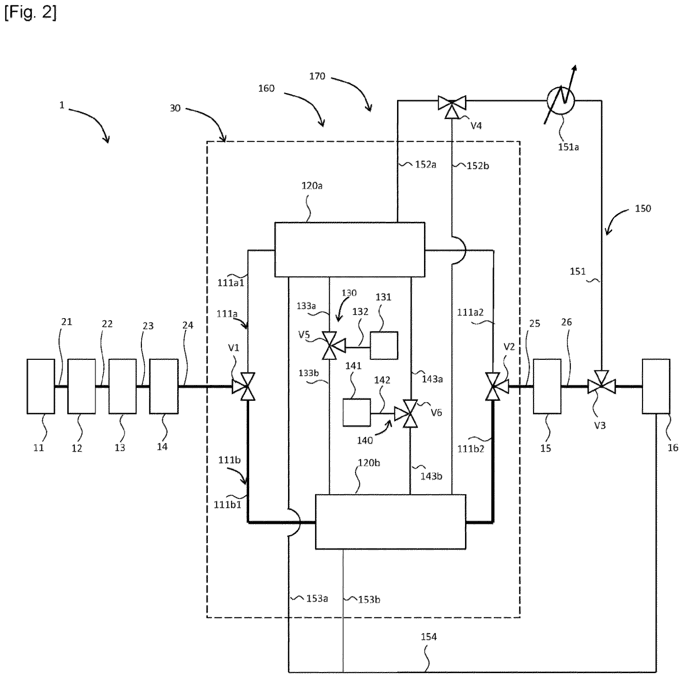

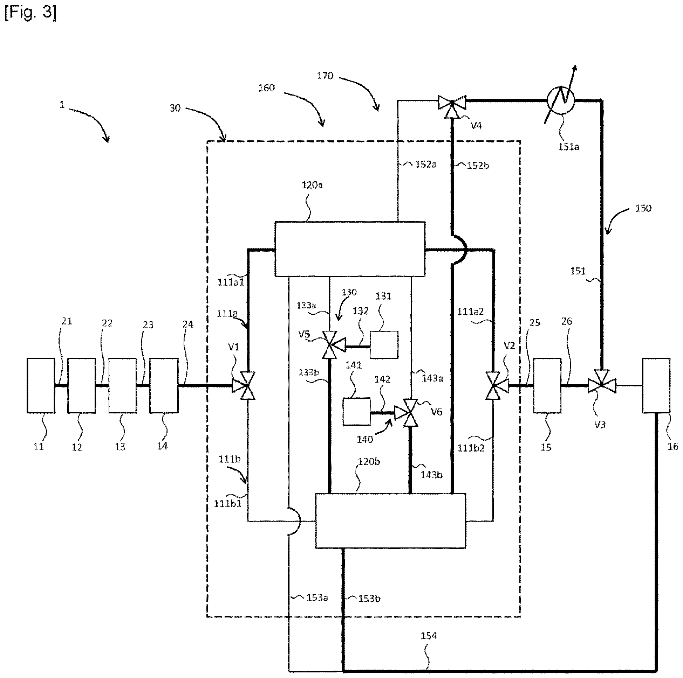

The incineration plant 1 shown in Fig. 2 and Fig. 3 is identical to the incineration plant 1 shown in Fig. 1.

However, in Fig. 1 to Fig. 3, the operating state of the incineration plant 1 is different as described below.

In Fig. 1 to Fig. 3, the fluid is flowing through the portions of the pipe represented by thick lines, and the fluid is not flowing through the portions represented by thin lines.

<Method for treating acid exhaust gas>

<<First Step: Regeneration step in first housing container (Fig. 1)»

First, as shown in Fig. 1, the three-way valve V5 is operated to switch into a state where the pipe 132 communicates with the pipe 133a and does not communicate with the pipe 133b. Further, the three-way valve V6 is operated to switch into a state where the pipe 142 communicates with the pipe 143a and does not communicate with the pipe 143b.

As a result, the alkaline aqueous solution is supplied from the alkali addition apparatus 130 to the first housing container 120a, and permeates into the used carbonate-type Mg-Al layered double hydroxide in the first housing container 120a, so that alkali is supplied into the carbonate-type Mg-Al layered double hydroxide.

The alkaline aqueous solution is discharged from the first housing container 120a into a waste liquid containing container 141.

In Fig. 1, the first three-way valve V1 is operated to switch into the state where the pipe 24 communicates with the pipe 111b and does not communicate with the pipe 111a. Further, the second three-way valve V2 is operated to switch into the state where the pipe 25 communicates with the pipe 111b and does not communicate with the pipe 111a. Further, the three-way valve V3 is operated to switch into the state where the pipe 26 communicates with return pipe 151 and does not communicate with the stack 16. Further, the three-way valve V4 is operated to switch into the state where the return pipe 151 communicates with the pipe 152a and does not to communicate with the pipe 152b.

As a result, the acid exhaust gas discharged from the incinerator 11 passes through the boiler 12, the gas cooling apparatus 13, the dust collector 14, and the first three-way valve V1 so as to be introduced into the second housing container 120b, where the acid materials contained in the acid exhaust gas are removed by the carbonate-type Mg-Al layered double hydroxide.

The treated gas in which acid materials have been removed from the acid exhaust gas in this manner is discharged from the second housing container 120b. The discharged treated gas passes through the second three-way valve V2, the induced draft fan 15, the third three-way valve V3, and the return pipe 151, and is adjusted to an appropriate temperature by the heat exchanger 151a. The treated gas then passes through the fourth three-way valve V4 and the return pipe 152a, and is introduced into the first housing container 120a.

The treated gas introduced into the first housing container 120a contains carbon dioxide derived from the acid exhaust gas discharged from the incinerator and carbon dioxide supplied from the carbonate-type Mg-Al layered double hydroxide through ion exchange with acid materials contained in the acid exhaust gas. In this manner, through ion exchange between the carbonate ions derived from carbon dioxide contained in the treated gas and the anions derived from the acid materials present in the used carbonate-type Mg-Al layered double hydroxide, the carbonate-type Mg-Al layered double hydroxide is regenerated. During the regeneration, since the alkaline aqueous solution is supplied to the first housing container 120a, the used carbonate-type Mg-Al layered double hydroxide is regenerated in the presence of alkali, so that the regeneration can be efficiently performed.

The treated gas introduced into the first housing container 120a passes through the pipe 153a and pipe 154, and is discharged from the stack 16.

<<Second step: Acid exhaust gas treatment step in second housing container (Fig. 2)»

After regeneration of the used carbonate-type Mg-Al layered double hydroxide in the first housing container 120a, the third three-way valve V3 is operated to switch into the state where the pipe 26 communicates with the stack 16 and does not communicate with the return pipe 151.

Also, the three-way valves V5 and V6 are operated to switch into a "closed" state.

As a result, the acid exhaust gas discharged from the incinerator 11 is introduced into the second housing container 120b through the boiler 12, the gas cooling apparatus 13, the dust collector 14, and the first three-way valve V1, where the acid materials contained in the acid exhaust gas are removed by the carbonate-type Mg-Al layered double hydroxide. In this manner, the treated gas in which the acid materials have been removed from the acid exhaust gas is discharged from the second housing container 120b, and discharged to the atmosphere from the stack 16 through the second three-way valve V2, the induced draft fan 15 and the third three-way valve V3.

The acid exhaust gas treatment step is thus performed in the second housing container 120b.

When the ion exchange capacity of the carbonate-type Mg-Al layered double hydroxide in the second housing container 120b declines due to continuation of the second step, the carbonate-type Mg-Al layered double hydroxide in the second housing container 120b is regenerated in the subsequent third step.

«Third step: Regeneration step in second housing container (Fig. 3)»

As shown in Fig. 3, the three-way valve V5 is operated to switch into the state where the pipe 132 communicates with the pipe 133b and does not communicate with the pipe 133a. Further, the three-way valve V6 is operated to switch into the state where the pipe 142 communicates with the pipe 143b and does not communicate with the pipe 143a.

As a result, the alkaline aqueous solution is supplied from the alkali addition apparatus 130 to the second housing container 120b, and permeates into the used carbonate-type Mg-Al layered double hydroxide in the second housing container 120b, so that the alkali is supplied into the carbonate-type Mg-Al layered double hydroxide.

Also, the alkaline aqueous solution discharged from the second housing container 120b is discharged to the waste liquid containing container 141.

Further, in Fig. 3, the first three-way valve V1 is operated to switch into the state where the pipe 24 communicates with the pipe 111a and does not communicate with the pipe 11 1b. Further, the second three-way valve V2 is operated to switch into a state where the pipe 25 communicates with the pipe 111a and does not communicate with the pipe 111b. Further, the three-way valve V3 is operated to switch into a state where the pipe 26 communicates with the return pipe 151 and does not communicate with the stack 16. Further, the three-way valve V4 is operated to switch into a state where the return pipe 151 communicates with the pipe 152b and does not communicate with the pipe 152a.

As a result, the acid exhaust gas discharged from the incinerator 11 is introduced into the first housing container 120a through the boiler 12, the gas cooling apparatus 13, the dust collector 14, and the first three-way valve V1, and the acid materials contained in the acid exhaust gas are removed by the carbonate-type Mg-Al layered double hydroxide.

The treated gas in which acid materials have been removed from the acid exhaust gas in this manner is discharged from the first housing container 120a. The discharged treated gas passes through the second three-way valve V2, the induced draft fan 15, the third three-way valve V3, and the return pipe 151, and is adjusted to an appropriate temperature by the heat exchanger 151a. The treated gas then passes through the fourth three-way valve V4 and the return pipe 152a, and is introduced into the second housing container 120b.

The treated gas introduced into the second housing container 120b contains carbon dioxide derived from the acid exhaust gas discharged from the incinerator and carbon dioxide supplied from the carbonate-type Mg-Al layered double hydroxide through ion exchange with acid materials contained in the acid exhaust gas. In this manner, through ion exchange between the carbonate ions derived from carbon dioxide contained in the treated gas and the anions derived from the acid materials present in the used carbonate-type Mg-Al layered double hydroxide, the carbonate-type Mg-Al layered double hydroxide is regenerated. During the regeneration, since the alkaline aqueous solution is supplied to the second housing container 120b, the used carbonate-type Mg-Al layered double hydroxide is regenerated in the presence of alkali, so that the regeneration can be efficiently performed.

The treated gas introduced into the second housing container 120b passes through the pipe 153b and pipe 154, and is discharged from the stack 16.

<<Fourth step: Acid exhaust gas treatment step in first housing container (not shown in drawing)>>

After regeneration of the used carbonate-type Mg-Al layered double hydroxide in the second housing container 120b, the third three-way valve V3 is operated to switch into the state where the pipe 26 communicates with the stack 16 and does not communicate with the return pipe 151.

Also, the three-way valves V5 and V6 are operated to switch into a "closed" state.

As a result, the acid exhaust gas discharged from the incinerator 11 is introduced into the first housing container 120a through the boiler 12, the gas cooling apparatus 13, the dust collector 14, and the first three-way valve V1, where the acid materials contained in the acid exhaust gas are removed by the carbonate-type Mg-Al layered double hydroxide. In this manner, the treated gas in which the acid materials have been removed from the acid exhaust gas is discharged from the first housing container 120a, and discharged to the atmosphere from the stack 16 through the second three-way valve V2, the induced draft fan 15 and the third three-way valve V3.

The acid exhaust gas treatment step is thus performed in the first housing container 120a.

When the ion exchange capacity of the carbonate-type Mg-Al layered double hydroxide in the first housing container 120a declines due to continuation of the fourth step, the first step described above is performed to regenerate the carbonate-type Mg-Al layered double hydroxide in the first housing container 120a.

Through repetition of the step 1 to step 4, the used carbonate-type Mg-Al layered double hydroxide can be regenerated while continuously operating the incineration plant.

In the first step, the timing for starting the supply of the alkaline aqueous solution to the first housing container 120a and the timing for starting the supply of the treated gas to the first housing container 120a may be the same. Alternatively, the supply of the alkaline aqueous solution may be performed first, or the supply of the treated gas may be started first. It is, however, preferable that the supply of the alkaline aqueous solution be started first.

Further, in the first step, with the three-way valve V6 being kept in the "closed" state, in a state where the alkaline aqueous solution is stored in the first housing container 120a, the treated gas may be supplied to the first housing container 120a and discharged from the pipe 153a. Alternatively, the three-way valve V6 may be operated such that the pipe 142 communicates with the pipe 143a and does not communicate with the pipe 143b. After the alkaline aqueous solution is supplied to the first housing container 120a to be contacted with the used carbonate-type Mg-Al layered double hydroxide, the solution may be discharged from the pipe 143a, while supplying the treated gas to the first housing container 120a to be discharged from the pipe 153a. In this case, the treated gas may be passed into the first housing container 120a after passing the alkaline aqueous solution into the first housing container 120a, or the passing of the liquid and the passing of the gas may be performed at the same time.

In the same manner, in the third step, the timing for starting the supply of the alkaline aqueous solution to the second housing container 120b and the timing for starting the supply of the treated gas to the second housing container 120b may be the same. Alternatively, the supply of the alkaline aqueous solution may be performed first, or the supply of the treated gas may be started first. It is, however, preferable that the supply of the alkaline aqueous solution be started first.

Further, in the third step, with the three-way valve V6 being kept in the "closed" state, in a state where the alkaline aqueous solution is stored in the second housing container 120b, the treated gas may be supplied to the second housing container 120b and discharged from the pipe 153b. Alternatively, the three-way valve V6 may be operated such that the pipe 142 communicates with the pipe 143b and does not communicate with the pipe 143a, and after supply of the alkaline aqueous solution to the second housing container 120b to be contacted with the used carbonate-type Mg-Al layered double hydroxide, the solution may be discharged from the pipe 143b, while supplying the treated gas to the second housing container 120b to be discharged from the pipe 153b. In this case, the treated gas may be passed into the second housing container 120b after passing the alkaline aqueous solution into the second housing container 120b, or the passing of the liquid and the passing of the gas may be performed at the same time.

Example

Hereinafter, the present invention will be described in more detail based on Example, though the present invention is not limited to the following Example.

[Preparation Example 1 of chlorine-type Mg-Al layered double hydroxide (used carbonate-type Mg-Al layered double hydroxide)]

An acrylic resin column with an inner diameter of 40 mm was filled with carbonate-type Mg-Al layered double hydroxide ("Kyoward (registered trademark) 500 PL", manufactured by Kyowa Chemical Industry Co., Ltd., synthesized hydrotalcite). A hydrogen chloride-containing gas prepared by introducing hydrogen chloride gas into air, adjusted to a hydrogen chloride concentration of about 1000 vol ppm at 100°C, was circulated until detection of hydrogen chloride at the column outlet, so that chlorine-type Mg-Al layered double hydroxide (used carbonate-type Mg-Al layered double hydroxide) was obtained.

The generation of chlorine-type Mg-Al layered double hydroxide was confirmed by powder X-ray diffraction measurement (powder X-ray diffractometer: "MiniFlex 600" manufactured by Rigaku Corporation) and ion chromatography (ion chromatograph: "Dionex Integrion" manufactured by Thermo Fisher Scientific Inc.).

[Example 1]

An acrylic resin column with an inner diameter of 40 mm was filled with 20 g of the chlorine-type Mg-Al layered double hydroxide prepared in Preparation Example 1.

Into the column, 20 g of 4 mass% of sodium hydroxide aqueous solution was fed from the top of the column.

A mixed gas adjusted to 80°C having a water content of 20 vol% and a carbon dioxide concentration of 13 vol% prepared by introducing water and carbon dioxide into air through adjustment of flow rate of each gas by a mass flow controller was circulated in the column at a superficial velocity of 1.0 m/min for 3 hours so as to perform a regeneration treatment test.

Before and after the regeneration treatment test, the chlorine content in the Mg-Al layered double hydroxide was measured by ion chromatography, and based on the measurement results, the desorption rate of chloride ions was calculated from the following formula, so that the regeneration efficiency of the carbonate-type Mg-Al layered double hydroxide was evaluated. The results are shown in Table 1. It can be said that the higher the desorption rate of chloride ions, the higher the efficiency of regeneration from the chlorine-type Mg-Al layered double hydroxide to the carbonate-type Mg-Al layered double hydroxide.

$$\text{Desorption rate of chloride ions (\%)} = [(B-A)/B] \times 100$$

Here, A means the chloride ion content in the mixed gas after the regeneration treatment test, and B means the chloride ion content in the mixed gas before the regeneration treatment test.

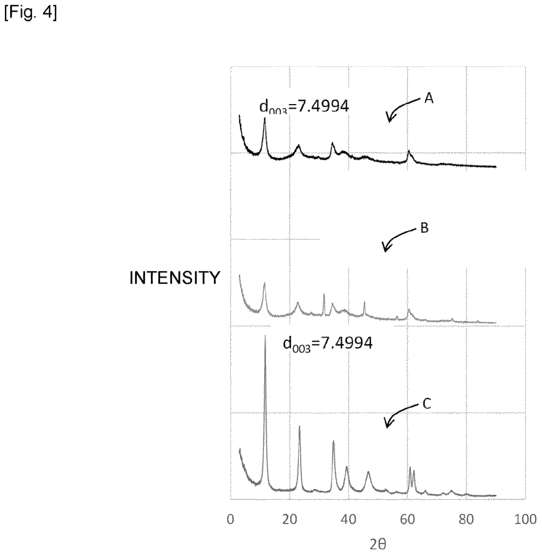

Further, powder X-ray diffraction measurement of Mg-Al layered double hydroxide before and after the regeneration treatment test was performed. The results are shown in Fig. 4. The results of identifying each component based on the results of powder X-ray diffraction measurement are shown in Table 2. When chloride ions are desorbed by regeneration, the chloride ions decrease and the content of carbonate ions increases.

In Fig. 4, A is the powder X-ray diffraction measurement result of the Mg-Al layered double hydroxide after the regeneration treatment test in Example 1, B is the powder X-ray diffraction measurement result of the Mg-Al layered double hydroxide after the regeneration treatment test in Comparative Example 1 described below, and C is the powder X-ray diffraction measurement result of the Mg-Al layered double hydroxide before the regeneration treatment test in Example 1. The structure of the Mg-Al layered double hydroxide was checked from the peak pattern and interlayer distance ($d_{003}$).

[Comparative Example 1]

The same operation as in Example 1 was performed except that 20 g of 4 mass% of sodium hydroxide aqueous solution was not fed from the top of the column, and the same measurements were performed.

These results are shown in Tables 1 and 2 and Fig. 4.

Table 1

|  | Desorption rate of chloride ions (%) | Powder XRD measurement result |
|---|---|---|
| Example 1 | 100 | Carbonate-type Mg-Al layered double hydroxide (No peak of chlorine-type Mg-Al layered double hydroxide) |
| Comparative Example 1 | 80 | Mixture of carbonate-type Mg-Al layered double hydroxide and chlorine-type Mg-Al layered double hydroxide |

Table 2

|  |  | Test sample | Example 1 | Comparative Example 1 |
|---|---|---|---|---|
| MgO | mass% | 40.1 | 39.6 | 38.7 |
| $Al_2O_3$ | mass% | 17.8 | 17.1 | 16.9 |
| $CO_2$ | mass% | 11.6 | 11.6 | 9.2 |
| Cl | mass% | 3.1 | 0.0 | 1.6 |
| Total of four components described above | mass% | 72.6 | 68.3 | 66.4 |

From each of the test results in Example and Comparative Example, it has been found that according to the present invention, a used carbonate-type Mg-Al layered double hydroxide (chlorine-type Mg-Al layered double hydroxide) can be efficiently regenerated into a carbonate-type Mg-Al layered double hydroxide.

Reference Signs List

1: Incineration plant
11: Incinerator
12: Boiler
13: Gas cooling apparatus
14: Dust collector
15: Induced draft fan
16: Stack
30: Layered double hydroxide housing apparatus
120a: First housing container

120b: Second housing container
130: Alkali addition apparatus
131: Alkaline aqueous solution storage tank
140: Waste liquid discharge apparatus
141: Waste liquid containing container
150: Regeneration gas supply apparatus
151a: Heat exchanger
160: Regeneration apparatus
170: Facility for treating acid exhaust gas
V1: First three-way valve
V2: Second three-way valve
V3: Third three-way valve
V4: Fourth three-way valve
V5: Three-way valve for supplying alkali
V6: Three-way valve for discharging alkali

**Claims**

1. A method for regenerating a used carbonate-type Mg-Al layered double hydroxide in which at least some of interlayer carbonate ions of a carbonate-type Mg-Al layered double hydroxide are exchanged with another anion, the method comprising:
contacting the used carbonate-type Mg-Al layered double hydroxide with a carbon dioxide-containing gas that comprises carbon dioxide in the presence of an alkali.

2. The method for regenerating a used carbonate-type Mg-Al layered double hydroxide according to claim 1,

   wherein the used carbonate-type Mg-Al layered double hydroxide is obtained by contacting a carbonate-type Mg-Al layered double hydroxide with an acid exhaust gas comprising carbon dioxide and acid materials other than carbon dioxide to remove the acid materials from the acid exhaust gas, thereby obtaining a treated gas, and the carbon dioxide-containing gas that comprises carbon dioxide is the treated gas.

3. The method for regenerating a used carbonate-type Mg-Al layered double hydroxide according to claim 2, wherein the acid exhaust gas is a combustion exhaust gas generated from an incinerator.

4. A method for treating an acid exhaust gas, comprising:

   an acid exhaust gas treatment step of contacting an acid exhaust gas comprising carbon dioxide and acid materials other than carbon dioxide with a carbonate-type Mg-Al layered double hydroxide to remove the acid materials from the acid exhaust gas, thereby obtaining a treated gas; and
   a regeneration step of regenerating a used carbonate-type Mg-Al layered double hydroxide generated in the acid exhaust gas treatment step,
   wherein in the regeneration step, the regeneration method according to claim 2 or 3 is performed.

5. A facility for treating an acid exhaust gas, comprising:

   a housing container that houses a carbonate-type Mg-Al layered double hydroxide;
   a supply pipe that supplies an acid exhaust gas comprising carbon dioxide and acid materials other than carbon dioxide to the housing container;
   a discharge pipe that discharges a treated gas discharged from the housing container after treatment of the acid materials therein; and
   a regeneration apparatus that regenerates the carbonate-type Mg-Al layered double hydroxide in the housing container;
   wherein the regeneration apparatus comprises an alkali addition apparatus that adds an alkali to the housing container, and a return pipe that returns the treated gas to the housing container.

6. The facility for treating an acid exhaust gas according to claim 5, wherein the alkali addition apparatus comprises an alkaline aqueous solution storage tank that stores an alkaline aqueous solution, and an alkaline aqueous solution inflow pipe that connects the alkaline aqueous solution storage tank and the housing container.

7. The facility for treating an acid exhaust gas according to claim 5 or 6, wherein the regeneration apparatus is connected to the housing container and comprises a waste liquid discharge apparatus to discharge the alkaline aqueous solution flowing into the housing container to the outside of the housing container.

[Fig. 1]

EP 4 438 170 A1

[Fig. 2]

[Fig. 3]

[Fig. 4]

$d_{003}=7.4994$

$d_{003}=7.4994$

A

B

INTENSITY

C

0    20    40    60    80    100

$2\theta$

## INTERNATIONAL SEARCH REPORT

| | International application No. |
|---|---|
| | **PCT/JP2022/033141** |

**A.    CLASSIFICATION OF SUBJECT MATTER**

*B01J 20/34*(2006.01)i; *B01D 53/50*(2006.01)i; *B01D 53/56*(2006.01)i; *B01D 53/68*(2006.01)i; *B01D 53/82*(2006.01)i; *B01J 20/08*(2006.01)i; *C01F 7/785*(2022.01)i

FI:    B01J20/34 F ZAB; B01D53/50 100; B01D53/56 100; B01D53/68 100; B01D53/82; B01J20/08 C; B01J20/34 G; C01F7/785

According to International Patent Classification (IPC) or to both national classification and IPC

**B.    FIELDS SEARCHED**

Minimum documentation searched (classification system followed by classification symbols)

B01J20/34; B01D53/50; B01D53/56; B01D53/68; B01D53/82; B01J20/08; C01F7/785

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-90913 A (KURITA WATER IND LTD) 17 June 2021 (2021-06-17)<br>claims 1, 3, paragraphs [0007], [0027]-[0028], fig. 1 | 1-7 |
| Y | JP 2005-193167 A (SOPHIA CO LTD) 21 July 2005 (2005-07-21)<br>paragraph [0036] | 1-7 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
|---|
| **PCT/JP2022/033141** |

| Patent document cited in search report | | | Publication date (day/month/year) | Patent family member(s) | | | Publication date (day/month/year) |
|---|---|---|---|---|---|---|---|
| JP | 2021-90913 | A | 17 June 2021 | WO | 2021/117261 | A1 | |
| | | | | CN | 114375220 | A | |
| | | | | TW | 202122349 | A | |
| JP | 2005-193167 | A | 21 July 2005 | WO | 2005/066080 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016190199 A
- JP 2021090913 A